Europäisches Patentamt

European Patent Office

Office européen des brevets

(11) Publication number: **0 127 869**
**B1**

# (12) EUROPEAN PATENT SPECIFICATION

(45) Date of publication of patent specification: **07.01.87**

(51) Int. Cl.⁴: **B 60 G 13/00, B 60 B 35/08**

(21) Application number: **84106091.6**

(22) Date of filing: **28.05.84**

(54) **Integral support unit for a vehicle rear wheel.**

(30) Priority: **07.06.83 IT 5343983 u**

(43) Date of publication of application:
**12.12.84 Bulletin 84/50**

(45) Publication of the grant of the patent:
**07.01.87 Bulletin 87/02**

(84) Designated Contracting States:
**DE FR GB SE**

(56) References cited:
**GB-A-2 020 235**
**US-A-2 435 814**
**US-A-4 002 286**
**US-A-4 274 654**

(73) Proprietor: **FIAT AUTO S.p.A.**
**Corso Giovanni Agnelli 200**
**I-10135 Torino (IT)**

(72) Inventor: **Egidi, Corrado**
**Corso Montecucco, 84/D**
**I-10100 Torino (IT)**

(74) Representative: **Bongiovanni, Guido et al**
**c/o Ingg. Carlo e Mario Torta Via Viotti 9**
**I-10121 Torino (IT)**

Courier Press, Leamington Spa, England.

## Description

This invention relates to an integral support unit for a vehicle rear wheel, arranged for direct connection by suitable connecting elements such as arms and/or torsion bars to the vehicle body in order to form a suspension therefor.

Integral support units for vehicle rear wheels with the features of the first part of claim 1 are known. Such units, which enable the various constituent elements of current vehicle rear suspensions to be replaced by a single element of low cost, lightness and rapid assembly and removal, are not however free from drawbacks. In particular, because of working tolerances and deformation due to welding (thermal distortion), units of the described type require further machining before being assembled, especially on that part of the stub axle is to constitute the wheel hub, such machining being slow and difficult because of the overall size of the integral unit and its difficultly of handling on the machine tool, due principally to the presence of the shock absorber. Such further machining also considerably increases the cost of the aforesaid integral support units, and lengthen their construction.

The object of the present invention is to provide integral support units for a vehicle rear wheel which are of the aforesaid type but are free from the said drawback, and in particular obviate the need for any mechanical machining on termination of welding. Said object is attained according to the present invention by an integral support unit for a vehicle rear wheel, of the aforementioned type which is characterised in that said stub axle comprises two substantially cylindrical elements which are joined together, the first element being in the form of a hollow tubular element of fork configuration fixed rigidly at a first end to the foot of said shock absorber and at its second, opposite end to the edge of said second seat, the second element being in the form of a support journal for said wheel, and disposed coaxially to said tubular element and rigidly fixed to said second end, which projects from said second seat, by a continuous frontal weld seam produced without weld material.

The present invention will be more apparent from the non-limiting description given hereinafter of one embodiment thereof with reference to the accompanying drawings, in which:

Figure 1 is a partly sectional transverse view of an integral wheel support unit constructed in accordance with the present invention; and

Figure 2 is an external front view of the unit of Figure 1.

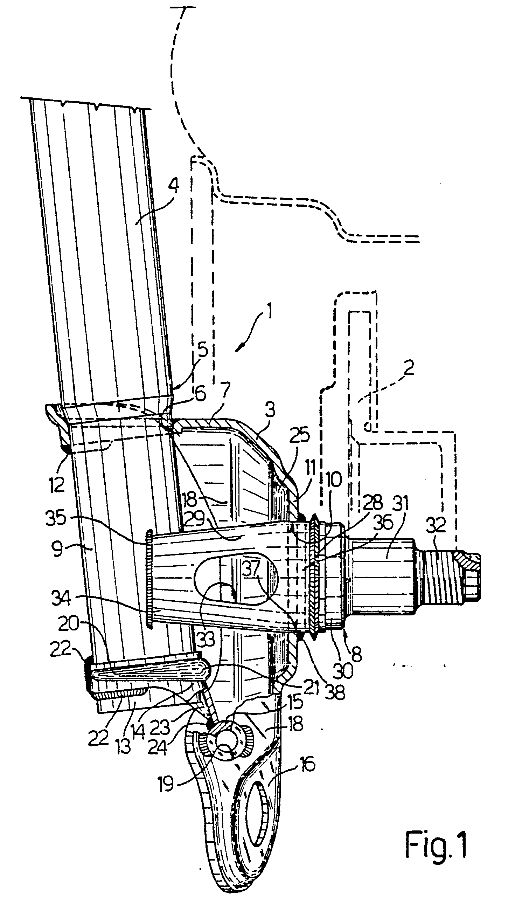

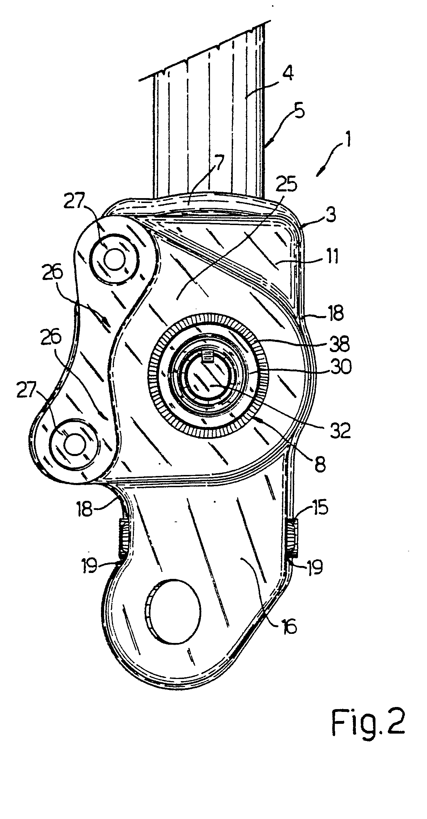

In Figures 1 and 2, the reference numeral 1 indicates overall an integral support unit for a wheel, not shown but of which the hub 2 is illustrated by dashed lines, of a vehicle, not shown, for example a motor vehicle, the unit being arranged for direct fixing to the body of said vehicle by means of arms and/or torsion bars and other similar connection elements in order to form a rear suspension for said vehicle. The unit 1 comprises a mounting 3 of pressed sheet metal construction and substantially of cup configuration, a shock absorber 4 of which the body 5 is directly fixed rigidly to the mounting 3 and is housed in and passes through a seat 6 provided in the upper side wall 7 and the mounting, and a stub axle 8 fixed rigidly to the foot 9 of the body 5 of the shock absorber 4 and to the mounting 3, and housed in and passing through a seat 10 provided in the end wall 11 of the mounting. The shock absorber 4 is disposed coaxially to the respective seat 6 and is fixed therein by at least one preferably continuous weld seam 11 made along a predetermined length of arc of the circumference of the body 5. The lower end 13 of the foot 9 of the shock absorber 4 is rigidly connected to the mounting 3 by means of an annular bracket 14 preferably of pressed sheet metal construction and welded at one end to the end 13 and at the opposite end to a transverse stiffening bar 15 which itself is welded to the lower end 16 of the mounting 3 parallel to the end wall 11 thereof. The bar 15 is substantially of internally hollow cylindrical tube configuration and is supported at its opposite ends by the facing opposing side walls 18 of the mounting 3 through coaxial holes 19 by which it is housed, and the bracket 14 comprises a ring portion 20 reinforced by an outward bulge 21 and mounted coaxially to the shock absorber 4 on the end 13 and fixed to this latter by means of preferably continuous weld seams 22, and further comprises a shank portion 23 of substantially C configuration which is welded by means of a seam 24 along a generating line of the bar 15. At the seat 10 (Figure 2) the end wall 11 is provided with an outward bulge 25 and with respective connection seats 26 for the brake calipers, not shown. The seats 26 are preferably provided with respective spacers 27 which are preferably welded into the seats to form projections for connecting said known brake calipers, not shown, the outward bulge 25 acting as a locator for assembly purposes. The stub axle 8 is disposed coaxially to the respective seat 10, and is fixed therein by means of a respective preferably continuous annular weld seam 28 in such a manner that the axis of the stub axle 8 intersects the axis of the shock absorber 4, and that these latter form a contained V preferably having at its vertex an angle which is preferably large, and greater than 90°.

According to the invention, the stub axle 8 comprises two separate elements constructed at different times and in different ways, these elements being substantially cylindrical and coaxial with each other and disposed facing each other and joined rigidly together by means of a preferably continuous annular weld seam 28, the first element being in the form of a hollow tubular element 29 substantially of fork configuration and preferably constructed by pressing for example a metal plate, the second element being in the form of a support journal 30 for said wheel, not shown, and its hub 2, and constructed preferably by machining a solid bar and provided with a cylindrical abutment 31 arranged to receive the support bearing, not shown, for the wheel hub 2, and further provided with a threaded end 32 arranged to support the elements for locking said bearing. The tubular element 29 is provided with lightening slots 33 and has a first end 34 of fork configuration arranged to engage with the body 3 of the shock absorber 4 and to be rigidly fixed to the foot 9 of this latter by suitable weld seams 35, and has its second end, opposite the end 34, configured substantially as a tube coaxial with the journal 30 and rigidly fixed by a preferably continuous annular weld seam 38 to the end 37 of the seat 10, from which it projects on the side opposite that facing the shock absorber 4. The journal 30 is rigidly fixed to the end 36 projecting from the seat 10 by means of the weld seam 28, which is produced without weld material by means of a magnetic arc welding method (MAGNETARC-KUKA). This method is known and consists of using induction coils to generate a rotating magnetic field in which an electric arc is struck between an electrode and the elements to be welded togther, in this case the element 29 and the journal 30. When the electric arc has been struck, it rotates about the pieces to be welded due to the effect of the magnetic field, thus producing local annular melting in them, the two elements being simultaneously pressed under predetermined pressure one against the other so as to form a continuous annular weld seam by the process of upsetting.

The advantages of the present invention are apparent from the aforegoing description. It enables an integral support unit of known type comprising a mounting, stub axle and shock absorber all welded together to be constructed in which no mechanical machining of that part of the stub axle designed to support the wheel is required and which after the welding operations presents its stub axle projecting from the end wall 11 of the mounting to the precisely correct distance. This is because by making the stub axle in the form of two elements, the journal 30, which is subjected to greater stress and for which greater precision is required, can be completely constructed by machining, whereas the element which connects the journal, mounting and shock absorber together, and which is less subjected to stress, can be constructed by pressing, leading to reduced cost and in particular a considerable overall weight reduction of the stub axle. Having fixed the element 22 and shock absorber 4 to the mounting 3, the journal 30 can then be finally fixed as it is already completely machine-finished and the only machining allowance which it has is on that face which is to be joined to the end 36 of the element 29 by pushing the two elements 29 and 30 together under a predetermined pressure and striking the rotating arc between them. The combined effect of pressure and heating due to the arc produces fluidisation of the zone of contact between the two elements 29 and 30, which results in formation of the seam 28 by upsetting, and of which the weld material is constituted by the actual material of the elements 29 and 30 themselves, and in particular the machining allowance left on said face of the journal 30. The formation of the seam 28 by taking metal from the elements 29 and 30 also produces a shortening of these latter, and thus the final length of the stub axle 8 progressively reduces as the welding proceeds, until it is exactly at its required final value. A suitable instrument, for example a strain gauge or a comparator, can measure the variation in the length of the stub axle 8, and when this is at the required value can interrupt the welding process, thus making the joint between the elements 29 and 30 while at the same time setting the length of the stub axle 8 to the correct value directly during the welding stage.

**Claims**

1. An integral support unit (1) for a vehicle rear wheel, of the type comprising a mounting (3) constructed of pressed sheet metal, a shock absorber (4) which is housed in and passes through a first seat (6) of said mounting (3) and is fixed by weld seams (12) therein, and a stub axle (8) which is housed in and passes through a second seat (10) of said mounting (3) and is fixed therein and to said shock abosrber (4) by weld seams (35, 38), characterised in that said stub axle (8) comprises two substantially cylindrical elements which are joined together, the first element being in the form of a hollow tubular element (29) of fork configuration fixed rigidly at a first end (34) to the foot (9) of said shock absorber (4) and at its second, opposite end (36) to the edge (37) of said second seat (10), the second element being in the form of a support journal (30) for said wheel, and disposed coaxially to said tubular element (29) and rigidly fixed to said second end (36), which projects from said second seat (10), by a continuous frontal weld seam (28) produced without weld material.

2. A unit (1) as claimed in claim 1, characterised in that said continous frontal weld seam (28) is produced by a magnetic arc process (MAGNETARC).

3. A unit (1) as claimed in claim 1 or 2, characterised in that said hollow tubular element (29) is constructed by pressing.

4. A unit (1) as claimed in any one of the preceding claims, characterised in that said mounting (3) is of substantially cup configuration, said first seat (6) and said second seat (10) being provided respectively in the upper side wall (7) and in the end wall (11) of said mounting (3), and said shock absorber (4) and stub axle (8) being disposed coaxially to the respective seats (6, 10), in such a manner as to form a V between them.

5. A unit (1) as claimed in any one of the preceding claims, characterised in that the lower end (13) of said foot (9) of said shock absorber (4) is rigidly connected to said mounting (3) by means of an annular bracket (14) welded at one end to said end (13) of said foot (9) of the shock absorber (4), and at its other end to a transverse stiffening bar (15) which is itself welded to the lower end (16) of said mounting.

6. A unit (1) as claimed in any one of the preceding claims, characterised in that said mounting (3) is provided with respective connection seats (26) for brake calipers.

## Revendications

1. Ensemble support monobloc (1) pour une roue arrière de véhicule, du type comportant une ferrure de montage (3) en tôle métallique emboutie, un amortisseur (4) logé, en le traversant, dans un premier siège (6) de cette ferrure de montage (3) et fixé à ce siège par des cordons de soudure (12) et une fusée (8) logée, en le traversant, dans un deuxième siège (10) de la ferrure de montage (3) et fixée dans ce siège et à l'amortisseur (4) par un cordon de soudure (35, 38), caractérisé en ce que la fusée (8) comporte deux éléments pratiquement cylindriques reliés ensemble, le premier élément se présentant sous la forme d'un élément tubulaire creux (29) ayant la forme d'une fourche, dont une première extrémité (34) est solidarisée de la base (9) de l'amortisseur (4) et dont la deuxième extrémité opposée (36) est fixée sur le bord (37) du deuxième siège (10), le deuxième élément se présentant sous la forme d'un tourillon support (30) pour la roue, disposé coaxialement à l'élément tubulaire (29) et solidarisé de cette deuxième extrémité (36) qui se projette du deuxième siège (10) par un cordon de soudure frontal continu (28) produit sans apport de matériau.

2. Ensemble (1) selon la revendication 1, caractérisé en ce que le cordon de soudure frontale continu (28) est produit par un procédé d'arc magnétique (MAGNETARC).

3. Ensemble (1) selon la revendication 1 ou 2, caractérisé en ce que l'élément tubulaire creux (29) est produit par emboutissage.

4. Ensemble (1) selon l'une quelconque des revendications précédentes, caractérisé en ce que la ferrure de montage (3) a pratiquement la forme d'une coupe, le premier siège (6) étant ménagé dans la paroi latérale supérieure (7) et le deuxième siège (10) étant ménagé dans la paroi terminale (11) de cette ferrure de montage (3), l'amortisseur (4) et la fusée (8) étant disposés coaxialement dans les sièges respectifs (6, 10) de manière à former entre eux un V.

5. Ensemble (1) selon l'une quelconque des revendications précédentes, caractérisé en ce que l'extrémité inférieure (13) de la base (9) de l'amortisseur (4) est solidarisée de la ferrure de montage (3) au moyen d'un support annulaire (14) dont une extrémité est soudée à l'extrémité (13) de la base (9) de l'amortisseur (4) et dont l'autre extrémité est fixée à une barre de renforcement transversal (15) qui est elle-même soudée à l'extrémité inférieure (16) de la ferrure de montage.

6. Ensemble (1) selon l'une quelconque des revendications précédentes, caractérisé en ce que cette ferrure de montage (3) comporte des sièges de liaison respectifs (26) pour les étriers de freins.

## Patentansprüche

1. Halterungsgesamteinheit (1) für das Hinterrad eines Fahrzeuges, von der Art mit einem Seitenstück (3) aus gestanztem Blech, einem durch einen ersten Sitz (6) dieses Seitenstückes durchgehend gelagerten und in diesem mittels Schweissnaht (12) befestigten Dämpfer (4), sowie einem in einem zweiten Sitz (10) des Seitenstückes (3) durchgehend gelagerten und in einem mittels Schweissnähten (35, 38) am Dämpfer (4) befestigten Achsschenkel (8), dadurch gekennzeichnet dass der Achsschenkel (8) zwei im wesentlichen zylinderförmige untereinander verbundene Elemente enthält, wo das erste aus einem gabelförmigen hohlen Rohrelement (29) welches fest mit einem ersten Ende (34) an einem Fusse (9) des Dämpfers (4) befestigt ist und das zweite aus einem Lagerzapfen (30) für das Rad besteht, welcher zum Rohrende (29) hin verläuft und fest mit dem zweiten Ende (36) das aus dem zweiten Sitz (10) hervorsteht mittels einer durchgehenden vorderen Schweissnaht verbunden ist, welche ohne Zusatzwerkstoff hergestellt wurde.

2. Einheit (1) nach Anspruch 1, dadurch gekennzeichnet dass die vordere durchgehende Schweissnaht (28) mittels Magnetschweissbogen (MAGNETARC) erhalten wurde.

3. Einheit (1) nach den Ansprüchen 1 oder 2, dadurch gekennzeichnet dass das hohle Rohrelement (29) mittels Stanzvorgang erhalten wurde.

4. Einheit (1) nach irgendeinem der vorhergehenden Ansprüche, dadurch gekennzeichnet, dass das Seitenstück (3) im wesentlichen tellerförmig ist, der erste (6) und zweite Sitz (10) durch eine obere Seitenwand (7) und einen Boden (11) dieses Seitenstückes läuft und der Dampfer (4) sowie der Achsschenkel (8) koaxial zu den diesbezüglichen Sitzen (6, 10) V-förmig verlaufen.

5. Einheit (1) nach irgendeinem der vorhergehenden Ansprüche, dadurch gekennzeichnet dass ein unteres Ende (13) des Fusses (9) des Dämpfers (4) fest mit dem Seitenstück (3) durch einen von einer Seite an das Ende (13) des Fusses (9) des Däpfers (4) geschweissten ringförmigen Bügel (14) und von der anderen Seite an einen Versteifungsquerträger (13), seinerseits an ein unteres Ende (16) des Seitenstückes geschweisst, verbunden ist.

6. Einheit (1) nach irgendeinem der vorhergehenden Ansprüche, dadurch gekennzeichnet dass das Seitenstück (3) entsprechende Befestigungssitze (26) für Bremszangen aufweist.

0 127 869

Fig.1

Fig.2